**Europäisches Patentamt**

**European Patent Office**

**Office européen des brevets**

(19)

(11) Veröffentlichungsnummer: **0 239 142**
A2

(12) # EUROPÄISCHE PATENTANMELDUNG

(21) Anmeldenummer: **87200314.0**

(22) Anmeldetag: **25.02.87**

(51) Int. Cl.⁴: **G 01 L 1/24,** G 01 L 11/00

(30) Priorität: **07.03.86 DE 3607462**

(43) Veröffentlichungstag der Anmeldung: **30.09.87**
**Patentblatt 87/40**

(84) Benannte Vertragsstaaten: **DE FR GB**

(71) Anmelder: **Philips Patentverwaltung GmbH,**
**Wendenstrasse 35 Postfach 10 51 49,**
**D-2000 Hamburg 1 (DE)**

(84) Benannte Vertragsstaaten: **DE**

(71) Anmelder: **N.V. Philips' Gloeilampenfabrieken,**
**Groenewoudseweg 1, NL-5621 BA Eindhoven (NL)**

(84) Benannte Vertragsstaaten: **FR GB**

(72) Erfinder: **Martens, Gerhard, Dr., Breslauer Strasse 40,**
**D-2359 Henstedt-Ulzburg (DE)**

(74) Vertreter: **Koch, Ingo, Dr.-Ing. et al, Philips**
**Patentverwaltung GmbH**
**Wendenstrasse 35 Postfach 10 51 49,**
**D-2000 Hamburg 1 (DE)**

(54) **Anordung zur Messung der Spannungsdoppelbrechung eines optischen Sensors.**

(57) Die Erfindung betrifft eine Anordnung zur Messung der von einer Messgrösse beeinflussten Spannungsdoppelbrechung eines optischen Sensors, mit einer Licht zweier benachbarter Wellenlängen $\lambda_1$ und $\lambda_2$ durch einen Sende-LWL über einen Polarisator und eine Verzögerungs-Platte durch den Sensor sendenden optischen Sendeeinrichtung, mit einem die Polarisationskomponenten des aus dem Sensor austretenden Lichts trennenden Analysator sowie mit einer Empfangs- und Auswerteeinrichtung, welcher die Intensitäten der Polarisationskomponenten über einen gemeinsamen Empfangs-LWL zugeführt sind und welche aus den messwertabhängigen Intensitäten der Polarisationskomponenten eine Aussage über die Grösse des Messwerts ableitet. Zur Verringerung des Aufwands für optische Bauelemente ist vorgesehen, dass die Weglänge w des Lichts durch die Verzögerungsplatte grösser als der Wert $\lambda_1/\triangle n$ ist, dass der Quotient der Werte sin $(2\pi \cdot w \cdot \triangle n/\lambda 1)$ und sin $(2\pi \triangle n/\lambda 2)$ eine negative Zahl ist, und dass die den Analysator in zueinander parallelen Polarisationsebenen verlassenden Komponenten der beiden Lichtanteile verschiedener Wellenlänge in den gemeinsamen zur Empfangs- und Auswerteeinrichtung führenden Übertragungsweg geleitet sind.

Anordnung zur Messung der Spannungsdoppelbrechung eines optischen Sensors

Die Erfindung bezieht sich auf eine Anordnung zur Messung der von einer Meßgröße beeinflußten Spannungsdoppelbrechung eines optischen Sensors, mit einer optischen Sendeeinrichtung zum Senden von Licht zweier benachbarter Wellenlängen $\lambda_1$ und $\lambda_2$, die über einen Sende-LWL, einen Polarisator und eine Verzögerungs-Platte optisch mit dem Sensor verbunden ist, mit einem Analysator zum Trennen der Polarisationskomponenten des aus dem Sensor austretenden Lichts, sowie mit einer über einen Empfangs-LWL optisch mit dem Analysator verbundenen Empfangs- und Auswerteeinrichtung, die dazu dient, aus den meßwertabhängigen Intensitäten der Polarisationskomponenten eine Aussage über die Größe des Meßwerts abzuleiten.

Bei einer durch die DE-OS 31 38 061 bekannten Anordnung dieser Art ist die Verzögerungsplatte eine $\lambda/4$-Platte, welche das zugeführte linear polarisierte Licht zirkular polarisiert. Im Sensor werden dann die orthogonalen Polarisationskomponenten durch die Meßgröße gegensinnig beeinflußt. Die durch die $\lambda/4$-Platte bewirkte Verschiebung des Arbeitsbereiches ergibt eine höhere Meßempfindlichkeit. Ausgewertet werden im bekannten Fall eine Polarisationskomponente des Lichts der einen Wellenlänge und die dazu orthogonale Polarisationskomponente des Lichts der anderen Wellenlänge. Nur diese beiden Komponenten, welche den Analysator in verschiedenen Richtungen und zeitlich versetzt verlassen, werden durch entsprechende Filter selektiert und über einen Koppler auf einen zur Empfangs- und Auswerteeinrichtung führenden gemeinsamen LWL gegeben.

Die erforderlichen Filter und Koppler sind aufwendige
Bauteile.

Der Erfindung liegt die Aufgabe zugrunde, die Anordnung
der eingangs genannten Art derart zu gestalten, daß der
Aufwand für optische Bauelemente verringert ist.

Die Lösung gelingt dadurch, daß die Dicke (d) der
Verzögerungsplatte derart gewählt ist, daß die Weglänge
(w) des Lichts durch die Verzögerungs-Platte größer als
der Wert $\lambda_1/\Delta n$ ist, und der Quotient der Werte $\sin(2\pi \cdot w \Delta n/\lambda_1)$
und
$\sin(2\pi \cdot w \cdot \Delta n/\lambda_2)$ eine negative Zahl ist, wobei $\Delta n$
die spezifische Doppelbrechung des Materials der
Verzögerungsplatte ist, und daß die den Analysator in
zueinander parallelen Polarisationsebenen verlassenden
Komponenten der beiden Lichtanteile verschiedener
Wellenlänge in den gemeinsamen zur Empfangs- und
Auswerteeinrichtung führenden Empfangs-LWL geleitet sind.

Die erfindungsgemäß entsprechend der erforderlichen
Weglänge w bemessene Dicke d der Verzögerungsplatte bildet
für die in einer gemeinsamen Ebene gemessenen Polarisationskomponenten des Lichtes beider Wellenlängen $\lambda_1$
und $\lambda_2$ einerseits eine positiv und andererseits eine
negativ verzögernde Platte, so daß die Lichtkomponenten
gegensinnig zueinander über die Meßgröße von dem Sensor
beeinflußt werden. Da nur diese beiden Komponenten den
Analysator auf dem gleichen Weg durchsetzen, brauchen sie
nicht durch optische Filter abgetrennt und durch einen
Koppler wieder zusammengeführt zu werden.

Zur Lösung der der Erfindung zugrundeliegenden Aufgabe sind mehrere
Bereiche der Dicke der Verzögerungsplatte geeignet, welche sich jedoch
hinsichtlich der erreichbaren Empfindlichkeit unterscheiden können. Es
ist natürlich anzustreben, möglichst geringe Dicken zu wählen. Hohe
Empfindlichkeiten trotz geringer Dicke sind dadurch erreichbar, daß die
Weglänge (w) kleiner als der Wert $\dfrac{\lambda_2 - 0,3\,\lambda_1}{\lambda_2 - \lambda_1} \cdot \dfrac{\lambda_1}{\Delta n}$ (für $\lambda_2 > \lambda_1$)

0239142
PHD 86-032 EP

Eine vorteilhafte Weiterbildung der Erfindung, welche besonders geringe Dicken der Verzögerungsplatte und die Einsparung eines zusätzlichen Analysators ermöglicht, ist dadurch gekennzeichnet, daß der Sensor eine orthogonal zur Strahlrichtung verlaufende, verspiegelte Endebene aufweist, die den Eingangsstrahl gleichachsig reflektiert und auf den Polarisator richtet, und daß den Polarisator in einer der Polarisationsebenen verlassende Lichtanteile der beiden Wellenlängen $\lambda_1$ und $\lambda_2$ in den Empfangs-LWL gekoppelt sind. Damit Meßfehler, die durch temperaturbedingte Änderungen der Dicke der Verzögerungsplatte entstehen können, kompensiert werden können, ist gemäß einer anderen Weiterbildung der Erfindung vorgesehen, daß ein Teilstrahl des Sendestrahls am Sensor vorbei als Referenzstrahl der Empfangs- und Auswerteeinrichtung zugeführt ist.

Die Erfindung wird anhand der Beschreibung von in der Zeichnung dargestellten vorteilhaften Ausführungsbeispielen näher erläutert.

Figur 1 zeigt Intensitätsverläufe der selektierten Polarisationskomponenten in Abhängigkeit der Weglänge durch die Verzögerungsplatte

Figur 2 zeigt eine erfindungsgemäße Meßanordnung mit transmissiv betriebenem Sensor

Figur 3 zeigt eine abgewandelte Anordnung mit einem reflektiv betriebenen Sensor

Figur 4 zeigt eine Anordnung nach Figur 3 bei welcher zusätzlich eine Referenzmeßanordnung zur Temperaturkompensation vorgesehen ist.

0239142

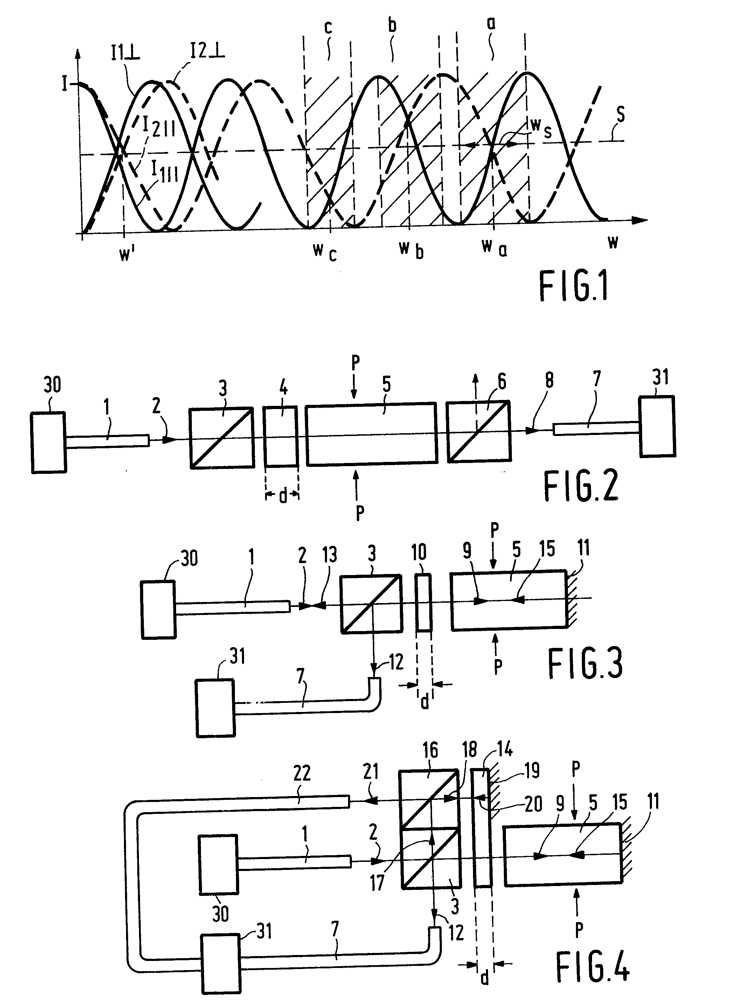

Bei der in Figur 2 schematisch dargestellten Anordnung wird Licht zweier benachbarter Wellenlängen $\lambda_1$ und $\lambda_2$ aus der Lichtquelle 30 über den Sende-LWL 1 in Richtung 2 durch den Polarisator 3 geleitet. In die Verzögerungsplatte 4 dringt dann linear polarisiertes Licht in einer Ebene, welche zwischen den Ebenen der Hauptachsen der Verzögerungs-platte 4 liegt. Dadurch entsteht am Ausgang der Verzögerungsplatte 4 zirkular oder zumindest elliptisch polarisiertes Licht, dessen mittels eines Analysators separierbaren orthogonalen Polarisationskomponenten von der Verzögerung der Verzögerungsplatte 4 und damit von deren Dicke d abhängig sind. In Figur 2 ist die Dicke d der Verzögerungsplatte 4 gleich der Weglänge w des Lichtstrahls in der Verzögerungsplatte.

Der Sensor 5 erhält durch auf ihn einwirkenden zu messenden Druck P doppelbrechende Eigenschaften und beeinflußt die Polarisationskomponenten des die Verzögerungsplatte 4 verlassenden Lichts druckabhängig. Der Analysator 6 leitet zueinander parallele Komponenten des Lichts der beiden Wellenlängen $\lambda_1$ und $\lambda_2$ auf gemeinsamem Weg (Pfeil 8) in den Empfangs-LWL 7, welcher zu einer Empfangs- und Auswerteeinrichtung 31 führt.

In den Figuren 2 bis 4 sind zur Vereinfachung der Darstellung optische Einrichtungen wie Objektive, Kugellinsen oder SELFOC-Linsen nicht gezeichnet. Diese werden einerseits dazu benötigt, das aus einem LWL austretende Licht zu einem parallelen Bündel zu kollimieren und andererseits dazu, das aus dem Analysator austretende Licht in den Empfangs-LWL 7 zu koppeln.

Bei der Ausführungsform nach Figur 3 wird der linear polarisierte Sendestrahl in Richtung des Pfeils 9 durch die Verzögerungsplatte 10 und den Sensor 5 geführt. Er wird durch die orthogonal zur Strahlrichtung verspiegelte Fläche 11 des Sensors 5 reflektiert und durchläuft
gleichachsig (Pfeil 15) nochmals den Sensor 5 und die
Verzögerungsplatte 10. Zueinander parallele Polarisationskomponenten des Lichts beider Wellenlängen $\lambda_1$ und $\lambda_2$
werden vom gleichzeitig als Analysator wirkenden
Polarisator 3 in Richtung des Pfeils 12 in den
Empfangs-LWL 7 geleitet. Die in dazu senkrechter Ebene
polarisierten Polarisationskomponenten werden in die
Sendefaser 1 in Pfeilrichtung 13 zurückgeführt. Um eine
Information über die spannungsabhängige Doppelbrechung des
Sensors 5 zu erhalten, können sowohl die über den
Empfangs-LWL 7 als auch die über den Sende-LWL 1 zurückgeführten Polarisationskomponenten ausgewertet werden. Auf
den Empfangs-LWL 7 könnte also verzichtet werden. Bei den
in den Figuren 3 und 4 dargestellten Anordnungen mit eine
verspiegelte Fläche 11 aufweisenden Sensoren 5 sind die
Dicken d der Verzögerungsplatten 10 bzw. 14 nur halb so
groß wie die der Platte 4 nach Figur 2 ( $d = w/2$).

Da die Verzögerungsplatten 4, 10 und 14 insbesondere bei
eng benachbarten Wellenlängen $\lambda_1$ und $\lambda_2$ relativ dick
gegenüber einer einfachen $\lambda/4$-Platte sind, können sich
Änderungen der Abmessungen infolge Temperaturschwankungen
relativ stark auswirken. Eine vorteilhafte Möglichkeit zur
Erfassung temperaturbedingter Änderungen der Dicke d einer
Verzögerungsplatte 14 zeigt Figur 4. Dabei ist gegenüber
der Ausführung nach Figur 3 zusätzlich der Polarisationsteiler 16 vorgesehen, in welchen ein vom Polarisator 3 in
Pfeilrichtung 17 abgelenkter Teil des Sendestrahls in
Pfeilrichtung 18 durch den oberen Bereich der Verzögerungsplatte 14 gegen die Spiegelfläche 19 und zurück in
Richtung der Pfeile 20 und 21 in den Referenz-LWL 22
geleitet wird. Das somit in die Empfangs-und Auswerteeinrichtung 31 gelangende Licht enthält eine Information
über die temperaturbedingte Dickenänderung der
Verzögerungsplatte 14. Damit ist eine Kompensation von
temperaturbedingten Meßfehlern möglich.

Die Wirkungsweise der erfindungsgemäß relativ dicken Verzögerungsplatten 4, 10 und 14 wird anhand der in Figur 1 dargestellten Kennlinien näher erläutert. Dort sind die Lichtintensitäten I der verschiedenen Polarisationskomponenten, welche am Ausgang der Verzögerungsplatten 4, 10 oder 14·meßbar sind, in Abhängigkeit der Weglänge w dargestellt. Mit dem Index $\|$ sind die Polarisationskomponenten bezeichnet, welche parallel zur ursprünglichen Polarisationsebene, und mit dem Index $\perp$ diejenigen, welche in einer dazu senkrechten Ebene mittels eines Analysators meßbar sind. Die Indizes 1 und 2 kennzeichnen die zugehörigen Wellenlängen $\lambda_1$ und $\lambda_2$ des Sendelichts.

Die Kennlinien $I_{1\perp}$ bzw. $I_{2\perp}$ verlaufen in Bezug auf eine Linie s spiegelbildlich zu den Kennlinien $I_{1\|}$ bzw. $I_{2\|}$.

Die Weglänge w' würde sich bei Verwendung einer $\lambda/4$-Platte wie im durch die DE-OS 31 38 061 bekannten Fall ergeben. Dabei bewirkt der Sensor, ausgehend von dem Arbeitspunkt mit der Weite w', eine Vergrößerung oder Verkleinerung der resultierenden Weite, wobei sich die Werte $I_{1\|}$ und $I_{2\perp}$ gegensinnig verändern, so daß die Meßempfindlichkeit relativ groß ist.

Gemäß der vorliegenden Erfindung werden jedoch nicht zwei in senkrechten Ebenen zueinander verlaufende Polarisationskomponenten ausgewertet, sondern zwei in gleicher Ebene meßbare Komponenten der verschiedenen Wellenlängen $\lambda_1$ und $\lambda_2$. Es ist alternativ möglich, entweder die Komponenten $I_{1\|}$ und $I_{2\perp}$ oder die Komponenten $I_{1\|}$ und $I_{2\|}$ auszuwerten. Nur der letztgenannte Fall wird anhand der Figur 1 erläutert.

Man erkennt, daß die Komponenten $I_{1||}$ und $I_{2||}$ entsprechend der unterschiedlichen Wellenlängen $\lambda_1$ und $\lambda_2$ verschieden verzögert werden. Bei Weiten w, die wesentlich größer als w' sind, also bei entsprechend großen Dicken d einer Verzögerungsplatte ergeben sich Bereiche a, b und c, in welchen sich die Intensitäten der in ein und derselben Ebene gemessenen Polarisationskomponenten der Wellenlängen $\lambda_1$ und $\lambda_2$ mit gegensinniger Steigung ändern. Bei einer Weite $w_a$ ergibt sich bei negativ oder positiv hinzugefügten Verschiebungsweiten $w_s$ des Sensors der größte Meßbereich mit größtmöglicher Empfindlichkeit. Das ist dann der Fall, wenn der Schnittpunkt der Kennlinien $I_{1||}$ und $I_{2||}$ möglichst nahe der Symmetrielinie s liegt. Dennoch kann es zur Verringerung von temperaturbedingten Meßfehlern sinnvoll sein, kleinere Weiten $w_b$ oder $w_c$ zu wählen und dabei eine Verringerung der Meßempfindlichkeit in Kauf zu nehmen.

Für die schraffierten Bereiche a, b und c sind die Vorzeichen von $\sin(2\pi \cdot w \cdot \Delta n/\lambda_1)$ und $\sin(2\pi \cdot w \cdot \Delta n/\lambda_2)$ verschieden. $\Delta n$ ist die spezifische Doppelbrechung des Materials der Verzögerungsplatte, welche bei relativ eng beieinanderliegenden Wellenlängen $\lambda_1$ und $\lambda_2$ praktisch nicht von der Wellenlänge abhängig ist.

Brauchbare Bereich a, b und c liegen für $\lambda_2 > \lambda_1$ im Bereich $w < \dfrac{\lambda_2 - 0{,}3\lambda_1}{\lambda_2 - \lambda_1} \cdot \dfrac{\lambda_1}{\Delta n}$, wobei sich größere Empfindlichkeiten ergeben, wenn die Weite w groß ist und geringere Temperaturempfindlichkeiten, wenn die Weite w klein ist.

PATENTANSPRÜCHE

1. Anordnung zur Messung der von einer Meßgröße beeinflußten Spannungsdoppelbrechung eines optischen Sensors, mit einer optischen Sendeeinrichtung zum Senden von Licht zweier benachbarter Wellenlängen $\lambda_1$ und $\lambda_2$, die über einen Sende-LWL, einen Polarisator und eine Verzögerungs-Platte optisch mit dem Sensor verbunden ist, mit einem Analysator zum Trennen der Polarisationskomponenten des aus dem Sensor austretenden Lichts, sowie mit einer über einen Empfangs-LWL optisch mit dem Analysator verbundenen Empfangs- und Auswerteeinrichtung, die dazu dient, aus den meßwertabhängigen Intensitäten der Polarisationskomponenten eine Aussage über die Größe des Meßwerts abzuleiten,

dadurch gekennzeichnet, daß die Dicke (d) der Verzögerungsplatte derart gewählt ist, daß die Weglänge (w) des Lichts durch die Verzögerungsplatte größer als der Wert $\lambda_1/\Delta n$ ist, und der Quotient der Werte $\sin(2\pi \cdot w \cdot \Delta n/\lambda_1)$ und $\sin(2\pi \cdot w \cdot \Delta n/\lambda_2)$ eine negative Zahl ist, wobei $\Delta n$ die spezifische Doppelbrechung des Materials der Verzögerungsplatte ist, und daß die den Analysator in zueinander parallelen Polarisationsebenen verlassenden Komponenten der beiden Lichtanteile verschiedener Wellenlänge in den gemeinsamen zur Empfangs-und Auswerteeinrichtung führenden Empfangs-LWL geleitet sind.

2. Anordnung nach Anspruch 1,
dadurch gekennzeichnet, daß die Weglänge (w) kleiner als der Wert $\dfrac{\lambda_2 - 0{,}3\,\lambda_1}{\lambda_2 - \lambda_1} \cdot \dfrac{\lambda_1}{\Delta n}$ (für $\lambda_2 > \lambda_1$) ist.

0239142

PHD 86-032 EP

3. Anordnung nach einem der Ansprüche 1 oder 2,
dadurch gekennzeichnet, daß der Sensor in eine orthogonal
zur Strahlrichtung verlaufende, verspiegelte Endebene
aufweist, die den Sendestrahl gleichachsig reflektiert und
auf den Polarisator richtet, und daß den Polarisator in
einer der Polarisationsebenen verlassendes Licht der
beiden Wellenlängen $\lambda_1$ und $\lambda_2$ in den Empfangs-LWL
gekoppelt sind.

4. Anordnung nach einem der Ansprüche 1 bis 3,
dadurch gekennzeichnet, daß ein Teilstrahl des
Sendestrahls am Sensor vorbei als Referenzstrahl der
Empfangs- und Auswerteeinrichtung zugeführt ist.

FIG.1

FIG.2

FIG.3

FIG.4

PHD 86-032